(19) Europäisches Patentamt
European Patent Office
Office européen des brevets

(11) **EP 3 268 120 B1**

(12) **EUROPÄISCHE PATENTSCHRIFT**

(45) Veröffentlichungstag und Bekanntmachung des Hinweises auf die Patenterteilung:
**10.05.2023** Patentblatt **2023/19**

(21) Anmeldenummer: **16711165.7**

(22) Anmeldetag: **09.03.2016**

(51) Internationale Patentklassifikation (IPC):
**B01F 23/213** (2022.01)  **B01F 25/314** (2022.01)
**B01F 25/421** (2022.01)  **B01F 25/432** (2022.01)
**F01N 3/10** (2006.01)  **F01N 3/28** (2006.01)
**F01N 3/029** (2006.01)  **F01N 3/20** (2006.01)
**F01N 3/025** (2006.01)

(52) Gemeinsame Patentklassifikation (CPC):
**F01N 3/2892; B01F 23/2132; B01F 25/3141;**
**B01F 25/4233; B01F 25/4323; F01N 3/10;**
F01N 3/0253; F01N 3/0293; F01N 3/206;
F01N 2260/04; F01N 2610/00; Y02T 10/12

(86) Internationale Anmeldenummer:
**PCT/EP2016/055007**

(87) Internationale Veröffentlichungsnummer:
**WO 2016/142417 (15.09.2016 Gazette 2016/37)**

(54) **MISCHVORRICHTUNG**

MIXING DEVICE

DISPOSITIF DE MELANGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.03.2015 DE 102015103425**

(43) Veröffentlichungstag der Anmeldung:
**17.01.2018** Patentblatt **2018/03**

(73) Patentinhaber: **Tenneco GmbH**
**67840 Edenkoben (DE)**

(72) Erfinder:
• **HAVERKAMP, Sascha**
**76751 Jockgrim (DE)**
• **GEHRLEIN, Joachim**
**76764 Rheinzabern (DE)**
• **KOHRS, Stefan**
**67433 Neustadt / Weinstraße (DE)**
• **HEIN, Eric**
**67434 Neustadt-Diedesfeld (DE)**
• **KOVACS, Attila**
**76133 Karlsruhe (DE)**

(74) Vertreter: **STT Societät Thews & Thews**
**Augustaanlage 32**
**68165 Mannheim (DE)**

(56) Entgegenhaltungen:
EP-A1- 2 652 279  WO-A1-2014/051605
US-A- 2 965 695

**Beschreibung**

Die Erfindung bezieht sich auf eine Mischvorrichtung zum Integrieren oder Anschließen bzw. Ankoppeln an ein Abgasrohr oder Verbinden mit einem Abgasrohr einer Brennkraftmaschine und zum Durchmischen eines Abgasstroms T, die gebildet ist aus einem Gehäuse mit einer Rohrwand mit rundem oder ovalem Querschnitt Q und mit einer parallel zum Abgasrohr ausrichtbaren Mittelachse und die gebildet ist aus einer Zwischenwand, die quer zur Mittelachse ausgerichtet ist, wobei die Zwischenwand das Gehäuse teilt und eine Anströmseite und eine Abströmseite aufweist, und die eine Trennung des Gehäuses in einen Anströmteil und eine Abströmteil bewirkt, wobei mindestens eine Einströmöffnung E1, E2 in der Zwischenwand vorgesehen ist, über die der Abgasstrom T zumindest teilweise von der Anströmseite der Zwischenwand zu einer gegenüberliegenden Abströmseite der Zwischenwand strömen kann, wobei die mindestens eine Einströmöffnung E1 mit Bezug zur Mittelachse exzentrisch platziert ist und einem Wandabschnitt W1 der Rohrwand angenähert ist.

Die Erfindung bezieht sich ferner auf eine Mischvorrichtung zum Anschließen an bzw. Integrieren in ein Abgasrohr einer Brennkraftmaschine und zum Durchmischen eines Abgasstroms T, die gebildet ist aus einem Gehäuse mit einer Rohrwand mit rundem oder ovalem Querschnitt Q und mit einer parallel zum Abgasrohr ausrichtbaren Mittelachse und mit einer ersten Zwischenwand Z1 und mit einer zweiten Zwischenwand Z2, die quer zur Mittelachse ausgerichtet sind, wobei beide Zwischenwände Z1, Z2 einen Mischraum zumindest teilweise begrenzen, wobei die erste Zwischenwand Z1 mindestens eine Einströmöffnung E1 aufweist, über die der Abgasstrom T in den Mischraum eintreten kann, wobei die mindestens eine Einströmöffnung E1 mit Bezug zur Mittelachse exzentrisch platziert ist und einem Wandabschnitt W1 der Rohrwand angenähert ist, und die zweite Zwischenwand Z2 mindestens eine Ausströmöffnung A1 aufweist, über die der Abgasstrom T aus dem Mischraum austreten kann, wobei die Ausströmöffnung A1 mit Bezug zur Mittelachse exzentrisch platziert ist und einem Wandabschnitt W2 der Rohrwand angenähert ist.

Bei dem Abgasrohr kann es sich auch um den entsprechenden Teil des Gehäuses für einen Katalysator oder einen Partikelfilter handeln.

Das Durchmischen bezieht sich auch auf ein einzumischendes Additiv, wie Reduktionsmittel oder Kohlenwasserstoffverbindungen.

Das Gehäuse weist meist einen runden Querschnitt Q auf. Alternativ kann dies auch einen ovalen oder polygonen Querschnitt Q aufweisen.

Zwecks Ausbildung einer Einströmöffnung E1 bzw. einer Ausströmöffnung A1 ist unbedingt eine Ausnehmung innerhalb einer die Querschnittsfläche QF des Gehäuses verschließenden Zwischenwand notwendig. Dies kann gemäß den Ausführungsbeispielen auch durch Anwendung einer entsprechend kleinen Zwischenwand erreicht werden, die über einen Teil des Umfangs im Durchmesser reduziert ist.

Es ist bereits eine Mischvorrichtung zum Anschließen an ein Abgasrohr einer Brennkraftmaschine zum Durchmischen eines Abgasstroms aus der WO 2012/080585 A1 bekannt. Diese weist ein Gehäuse mit einer Rohrwand mit rundem Querschnitt und einer parallel zum Abgasrohr ausrichtbaren Mittelachse sowie eine Zwischenwand mit einer Einströmöffnung auf, die im Wesentlichen quer zur Mittelachse ausgerichtet ist. Die Zwischenwand ist schneckenförmig gestaltet, so dass der gesamte Abgasstrom gleichsinnig in Umfangsrichtung abgelenkt wird. Zudem ist eine nachgeschaltete zweite Zwischenwand mit einer Ausströmöffnung vorgesehen, die zusammen einen Mischraum zumindest teilweise begrenzen.

US 2,965,695 zeigt eine Mischvorrichtung für zwei Flüssigkeiten.

Die WO 2014/051605 A1 zeigt eine Mischvorrichtung mit zwei Wänden zur Erzeugung eines Abgaswirbels.

Aus der US 8,033,104 B2 ist eine Mischvorrichtung bekannt, die eine quer zum Abgasrohr liegende perforierte Zwischenwand und einen Zuführkanal für Reduktionsmittel aufweist. Ein Teil des Abgasstroms vermischt sich beim Durchströmen des perforierten Zuführkanals mit dem Reduktionsmittel. Ein zweiter Teil des Abgases wird nicht durch den Zuführkanal geleitet, sondern durchströmt die Perforation der Zwischenwand und gelangt somit zum Ausgang der Mischvorrichtung.

In der DE 10 2013 012 909 A1 wird eine Mischkammer beschrieben, die ein rohrförmiges Strömungsleitelement aufweist, durch das der Abgasstrom von einer Eingangsöffnung der Mischkammer zu einer Ausgangsöffnung geführt wird, wobei die Achse des Strömungskanals quer zur Mittelachse der Mischkammer liegt. An einem Ende des Strömungsleitelementes kann ein Zusatzstoff eingespritzt werden, so dass sich dieser in dem rohrförmigen Kanal mit dem Abgas vermischt.

Die FR 2 943 381 A1 beschreibt ein rohrförmiges Mischelement mit drei Zwischenwänden, wobei die mittlere Zwischenwand mit Bezug zur Mittelachse gegenüberliegend zur ersten und letzten Zwischenwand angeordnet ist.

Die WO 2014 051617 A1 beschreibt ebenfalls eine Mischvorrichtung, die eine Umlenkung des Abgasstromes in Umfangsrichtung bewirkt.

Die DE 10 2012 224 198 A1 beschreibt einen klassischen Drallmischer bestehend aus einem Mischblech mit mehreren über den Umfang verteilten Mischflügeln.

Der Erfindung liegt die Aufgabe zugrunde, eine Mischvorrichtung derart auszubilden und anzuordnen, dass ein gutes Mischverhalten trotz kompakter und platzsparender Bauweise gewährleistet wird.

Gelöst wird die Aufgabe erfindungsgemäß dadurch, dass auf der Abströmseite ein Strömungsleitelement S2 mit einer Längsachse L2 vorgesehen ist, das mit der Zwischenwand einen Mischraum zumindest teilweise begrenzt und mittels dessen eine zumindest teilweise Umlenkung des Abgasstroms T von seiner ursprünglichen Strömungsrichtung in eine radiale Richtung zur Mittelachse bzw. zum Gehäuse bewirkbar ist, wobei das Strömungsleitelement S2 mindestens zwei Ausströmöffnungen A1, A2 aufweist und mittels des Strömungsleitelements S2 der Abgasstrom T ausgehend von der mindestens einen Einströmöffnung E1, E2 zu den mindestens zwei Ausströmöffnung A1, A2 leitbar ist, wobei alle Ausströmöffnungen A1, A2 mit Bezug zur Mittelachse exzentrisch platziert sind und einem Wandabschnitt W2 der Rohrwand angenähert sind, wobei der Wandabschnitt W2 mit Bezug zur Mittelachse gegenüberliegend zu dem Wandabschnitt W1 angeordnet ist, und dass die Ausströmöffnungen A1, A2 mit Bezug zu der Längsachse L1, L2 auf gegenüberliegenden Seiten des Strömungsleitelements S2 angeordnet sind, wobei das Strömungsleitelement S2 sich in die Richtung der Abgasströmung über die Zwischenwand erstreckt und die Ausströmöffnungen A1, A2 auf gegenüberliegenden Seiten des Strömungsleitelements S2 angeordnet sind und einen Steg ausbilden, wobei mit Bezug zur Mittelachse ein erster Teilstrom T3 zumindest teilweise gegen den Uhrzeigersinn und ein zweiter Teilstrom T4 zumindest teilweise im Uhrzeigersinn aus den Ausströmöffnungen A1, A2 leitbar ist. Durch die Anordnung der Ausströmöffnungen A1, A2 auf gegenüberliegenden Seiten des Strömungsleitelements S2 wird ein Steg ausgebildet.

Gelöst wird die Aufgabe erfindungsgemäß auch dadurch, dass der Wandabschnitt W2 mit Bezug zur Mittelachse gegenüberliegend zum Wandabschnitt W1 angeordnet ist, so dass eine zumindest teilweise Umlenkung des Abgasstroms T zumindest teilweise in eine radiale Richtung zur Mittelachse in eine Richtung zu der mindestens einen Ausströmöffnung A1 bewirkbar ist, und dass in Strömungsrichtung nach der ersten Zwischenwand Z1 und nach der radialen Ablenkung bzw. vor der zweiten Zwischenwand Z2 im Bereich der Ausströmöffnung A1 mindestens ein Strömungsleitelement S3 im Mischraum vorgesehen ist, das in radialer Richtung über die Rohrwand hervorsteht und das eine Teilung des Abgasstroms T in zwei Teilströme T3, T4 bewirkt, wobei mit Bezug zur Mittelachse ein erster Teilstrom T3 gegen den Uhrzeigersinn und ein zweiter Teilstrom T4 im Uhrzeigersinn um das Strömungsleitelement S3 herum leitbar ist. Im Betrieb führt das Strömungsleitelement S3 den ersten Teilstrom T3 gegen den Uhrzeigersinn und den zweiten Teilstrom T4 im Uhrzeigersinn.

Die Einströmöffnung E1 liegt mit Bezug zur Mittelachse gegenüberliegend zu der jeweiligen Ausströmöffnung A1, A2. In Bezug auf eine Symmetrieachse, die quer zur Mittelachse bzw. rechtwinklig zu einer durch die Mittelachse und Längsachse L2 aufgespannten Ebene LE verläuft, ist die Einströmöffnung E1 zwischen der Symmetrieachse Sy und dem Wandabschnitt W1 platziert, während die jeweilige Ausströmöffnung A1, A2 zwischen der Symmetrieachse Sy und dem Wandabschnitt W2 platziert ist. Durch die mit Bezug zur Mittelachse gegenüberliegende Anordnung der Ein- und Ausströmöffnungen E1, A1, A2 wird eine Umlenkung des Abgasstroms T in eine radiale Richtung zum Rohr erreicht. Diese wiederum unterstützt die Funktion des Strömungsleitelements S2, S3 das die gegensinnige Ablenkung in Umfangsrichtung bewirkt, mithin im Uhrzeigersinn und entgegen des Uhrzeigersinns.

Es hat sich in Untersuchungen gezeigt, dass die Umlenkung des gesamten Abgasstroms in eine einzelne gleichgerichtete Drallströmung in Umfangsrichtung zu einer nachteiligen Wechselwirkung mit der Gehäusewand der Mischvorrichtung führt, wie beispielsweise die Kondensation bzw. das Auskristallisieren eines mitgeführten Additivs. Durch die Anwendung eines Strömungsleitelementes, welches den Abgasstrom teilt und in eine gegensinnige Umfangsbewegung führt, in Kombination mit einer Strömungsumlenkung des gesamten Abgasstroms in eine radiale Richtung, fällt die Umfangsgeschwindigkeit insgesamt geringer aus, was auch zu geringeren Zentrifugalkräften führt. Mithin werden die im Abgasstrom mitgeführten Aerosole des Additivs weniger stark der Gehäusewand zugeführt, womit der Kondensations- bzw. Kristallisationsgrad erheblich gesenkt wird. Die gegensinnige Umlenkung führt zu einem weiteren Durchmischen des Abgasstroms. Dabei kommt es für die Teilung des Abgasstromes und die jeweilige Umlenkung zunächst auf die Strömungsverhältnisse an der Ausströmöffnung A1 an. Eine stromauf im Bereich der Einströmöffnung E1 angewandte Teilung des Abgasstromes und/oder dessen Umlenkung in Umfangsrichtung kann wie nachstehend ausgeführt vorteilhaft sein.

Vorteilhaft kann diesbezüglich sein, wenn an der Zwischenwand ein erstes Strömungsleitelement S1 mit einer Längsachse L1 vorgesehen ist, das in axialer Richtung stromauf über die Zwischenwand hervorsteht und das mit der Zwischenwand den Mischraum zumindest teilweise begrenzt, wobei zwei Einströmöffnungen E1, E2 in der Zwischenwand vorgesehen sind, die mit Bezug zur Längsachse L1 bzw. der Ebene LE gegenüberliegend angeordnet sind, wobei das Strömungsleitelement S1 eine Teilung des Abgasstroms T in zwei Teilströme T1, T2 bewirkt, wobei mit Bezug zur Mittelachse ein erster Teilstrom T1 im Uhrzeigersinn und ein zweiter Teilstrom T2 gegen den Uhrzeigersinn um das Strömungsleitelement S1 herum in die jeweilige Einströmöffnung E1, E2 und in den Mischraum leitbar ist. Der Abgasstrom wird somit bereits beim Eintreten in den Mischraum geteilt und in Umfangsrichtung abgelenkt, so dass die Durchmischung weiter verbessert wird. Durch die Anordnung der Einströmöffnungen E1, E2 auf gegenüberliegenden Seiten des Strömungsleitelements S1 wird ein Steg ausgebildet.

Vorteilhaft kann es hierzu auch sein, wenn die Strömungsleitelemente S1, S2 einteilig ausgebildet sind und/oder wenn zumindest ein Strömungsleitelement S1, S2 integraler Bestandteil der Zwischenwand und/oder der Rohrwand ist. Die Kombination einer Zwischenwand mit einem darin diametral verlaufenden Rohr, welches die Strömungsleitelemente S1, S2 bildet und den Mischraum begrenzt, erscheint vorteilhaft.

Vorteilhaft kann es ferner sein, wenn sich die Einströmöffnung E1, E2 und/oder die Ausströmöffnung A1, A2 zumindest teilweise oder vollständig auf das Strömungsleitelement S1, S2 erstreckt oder im Strömungsleitelement S1, S2 vorgesehen ist.

Es bedarf einer Einströmöffnung, durch die das Abgas hindurchtreten kann. Je nach Aufmachung der Mischvorrichtung ist diese innerhalb der Zwischenwand angeordnet. Sofern das Strömungsleitelement S1 integraler Bestandteil der Zwischenwand ist, bleibt es bei der Einströmöffnung in der Zwischenwand. Lediglich die Positionierung der Einströmöffnung kann so verändert werden, dass das Strömungsleitelement S1 erfasst ist. Wenn das Strömungsleitelement S1 ein separates Bauteil ist, welches an der Zwischenwand platziert ist, so bedarf es einer Einströmöffnung sowohl in der Zwischenwand als auch im Strömungsleitelement S1. Gleiches gilt für die Ausströmöffnungen.

Wenn das Strömungsleitelement S1 integraler Bestandteil der Zwischenwand ist, bedarf es für das Strömungsleitelement S2 keiner weiteren Zwischenwand, d. h. das Strömungsleitelement S2 kann als separates Bauteil ausgebildet sein, welches an der einen Zwischenwand platziert ist. In äquivalenter Weise kann auch das Strömungsleitelement S2 integraler Bestandteil der Zwischenwand sein, so dass das Strömungsleitelement S1 als separates Bauteil ausgebildet ist.

Schließlich ist es auch möglich, dass zwei Zwischenwände vorgesehen sind und das jeweilige Strömungsleitelement S1, S2 integraler Bestandteil der jeweiligen ersten bzw. zweiten Zwischenwand ist.

Dabei kann es vorteilhafterweise vorgesehen sein, dass die Zwischenwand und die Mittelachse einen Winkel $\alpha$ zwischen 20° und 80° oder zwischen 30° und 60° oder zwischen 55° und 75° oder von 65° einschließen. Der Winkel zwischen der Zwischenwand und der Mittelachse bestimmt das Verhältnis von Querschnittsgröße bzw. Gehäusehöhe zur Baulänge bzw. Gehäuselänge. Da eine möglichst kurze Baulänge der Mischvorrichtung angestrebt wird, sind Winkel zwischen 55° und 75° besonders vorteilhaft. In Bezug auf die Zwischenwand ist abzustellen auf die Gerade G, die sich aus der Verbindung der zwei am weitesten stromauf- und stromabwärts gelegenen Verbindungspunkte der Zwischenwand mit der Rohrwand ergibt.

Hierzu kann es vorteilhaft sein, wenn die Zwischenwand eine einfach oder mehrfach abgewinkelte, geschwungene oder gewölbte Form hat, wie bspw. eine L-, Z-, oder S-Form. Die Zwischenwand kann auch bezüglich der Ebene LE asymmetrisch ausgebildet sein.

Außerdem kann es vorteilhaft sein, wenn im Mischraum im Bereich vor den Ausströmöffnungen A1, A2 zwecks Vermeidung eines Strömungsstaupunktes ein Wellboden und/oder ein Strömungsleitelement wie ein Kegel oder eine Halbkugel oder eine Rampe vorgesehen ist.

Vorteilhaft kann es zudem sein, wenn die Zwischenwand zumindest teilweise in das Gehäuse integriert ist oder zumindest teilweise aus dem Gehäuse gebildet ist.

Zudem kann es vorteilhaft sein, wenn eine Zuführvorrichtung mit einer Zuführdüse vorgesehen ist, über die ein Additiv in den Mischraum einbringbar ist. Wenn das Additiv bereits dem Abgasstrom zugemischt ist, kann mittels der Mischvorrichtung eine verbesserte Durchmischung erreicht werden. Selbstverständlich ist das Zumischen innerhalb der Mischvorrichtung ebenfalls vorgesehen. Hierbei ist es vorgesehen, dass das Additiv in einem Winkel zwischen 5° und 185° zur Mittelachse eingespritzt wird und somit u.a. die Innenwände des Mischraums zur Zerstäubung und Verdampfung des Additivs genutzt werden.

Vorteilhaft kann es auch sein, wenn die mindestens eine Einströmöffnung E1, E2 und/oder die Einströmöffnungen E1, E2 einen Einströmquerschnitt QE bilden und das Gehäuse eine strömungswirksame Querschnittsfläche QF aufweist, mit 0,08 QF <= QE <= 0,42 QF. Der Einströmquerschnitt bewegt sich also zwischen 8% und 42% des Rohrquerschnitts bzw. des Gehäusequerschnitts. Damit einher geht eine ausreichende Beschleunigung des Abgases einerseits und vertretbare Druckverluste andererseits.

Entsprechend kann es vorteilhaft sein, wenn die Ausströmöffnung A1 oder die Ausströmöffnungen A1, A2 einen Ausströmquerschnitt QA bilden und das Gehäuse eine strömungswirksame Querschnittsfläche QF aufweist, mit 0,08 QF <= QA <= 0,42 QF.

Vorteilhaft kann es zudem sein, wenn die mindestens eine Einströmöffnung E1, E2 oder die Einströmöffnungen E1, E2 einen Einströmquerschnitt QE bilden und mindestens eine weitere Einströmöffnung Ex in dem Strömungsleitelement S1 oder in der Zwischenwand Z1 vorgesehen ist, über die ein Teil des Abgasstroms T in den Mischraum eintreten kann, wobei die mindestens eine Einströmöffnung Ex einen Einströmquerschnitt Xe bildet, mit Xe <= 0,1 QE.

Vorteilhaft kann es auch sein wenn die Ausströmöffnung A1 oder die Ausströmöffnungen A1, A2 einen Ausströmquerschnitt QA bilden und mindestens eine weitere Ausströmöffnung Ax in dem Strömungsleitelement S2 oder in der Zwischenwand Z2 vorgesehen ist, über die ein Teil des Abgasstroms T den Mischraum verlassen kann, wobei die mindestens eine Ausströmöffnung Ax einen Ausströmquerschnitt Xa bildet, mit Xa <= 0,1 QA.

Ergänzend zu den Ein- und Ausströmöffnungen E1, E2, A1, A2 können weitere Öffnungen Ex, Ax vorgesehen sein. Während die Platzierung der Ein- und Ausströmöffnungen E1, E2, A1, A2 erfindungsgemäß so ausgebildet ist, dass eine Umlenkung des Abgasstroms in eine radiale Richtung zum Rohr erreicht wird, können die weiteren Öffnungen Ex, Ax beliebig platziert sein. Vorzugsweise sind Öffnungen Ex jedoch im Bereich des Steges des Strömungsleitelement S1 angeordnet, so dass die gesamte Abgasströmung in den Mischraum einströmt. Zusätzlich können Ausströmöffnungen Ax im Bereich des Steges des Strömungsleitelementes S2 angeordnet sein. Bei dem Wert Xe handelt es sich um den Perforationsquerschnitt, mithin die Summe der Querschnitte aller Einströmöffnungen Ex und bei dem Wert Xa handelt es sich um die Summe der Querschnitte aller Ausströmöffnungen Ax. Vorzugsweise gilt 0,03 A <= Xa <= 0,07 A bzw. 0,03 E <= Xe <= 0,07 E.

Vorteilhaft kann es auch sein, wenn an mindestens einer Einströmöffnung Ex und/oder an mindestens einer Ausströmöffnung Ax ein Strömungsflügel vorgesehen ist. Zur Vermeidung eines Strömungsstaupunktes in diesem Bereich bzw. zur besseren Ausrichtung der durch die Einströmöffnung Ex und/oder die Ausströmöffnung Ax geführten Hilfsströmung ist diese durch die Flügel in radialer Richtung und/oder in Umfangsrichtung ablenkbar.

Zudem kann es vorteilhaft sein, wenn im Mischraum mindestens ein statischer Mischer bzw. ein Mischrohr und/oder mindestens ein ebenes oder winkeliges oder gewölbtes Prallblech vorgesehen ist, wobei das Prallblech weitestgehend parallel zur Längsachse L1, L2 des Strömungsleitelementes S1, S2 angeordnet ist. Das Prallblech kann mit einer Hydrolysebeschichtung versehen sein, die die Zersetzung bzw. Umwandlung des Additivs unterstützt. Es ist auch eine Antihaftbeschichtung oder eine Antihaftoberflächenstruktur vorgesehen. Vorteilhaft ist es die Prallbleche derart anzuordnen, dass wenig zusätzlicher Druckverlust generiert wird. Dies wird dadurch erreicht, dass die Bleche nahezu parallel zur Strömungsrichtung im Mischraum angeordnet werden.

Weitere Vorteile und Einzelheiten der Erfindung sind in den Patentansprüchen und in der Beschreibung erläutert und in den Figuren dargestellt. Es zeigt:

Figur 1a, 1b      eine Schnittdarstellung der Prinzipskizze der Mischvorrichtung in der Ansicht von vorne;

Figur 1b      die Mischvorrichtung nach Figur 1a in der Ansicht von hinten;

Figur 2a, 2b      die jeweilige Schnittdarstellung A-A bzw. B-B nach Figur 1a;

Figur 3a      die Mischvorrichtung mit Abgasrohr;

Figur 3b      eine Darstellung der Trennwand mit einteiligem Strömungsleitelement S1, S2;

Figur 4      eine alternative Ausführungsform in der perspektivischen Ansicht;

Figur 5a      die Mischvorrichtung nach Figur 4 in der Ansicht von hinten;

Figur 5b      die Schnittdarstellung C-C aus Figur 5a;

Figur 6      eine Schnittdarstellung einer Prinzipskizze ohne Mischrohr.

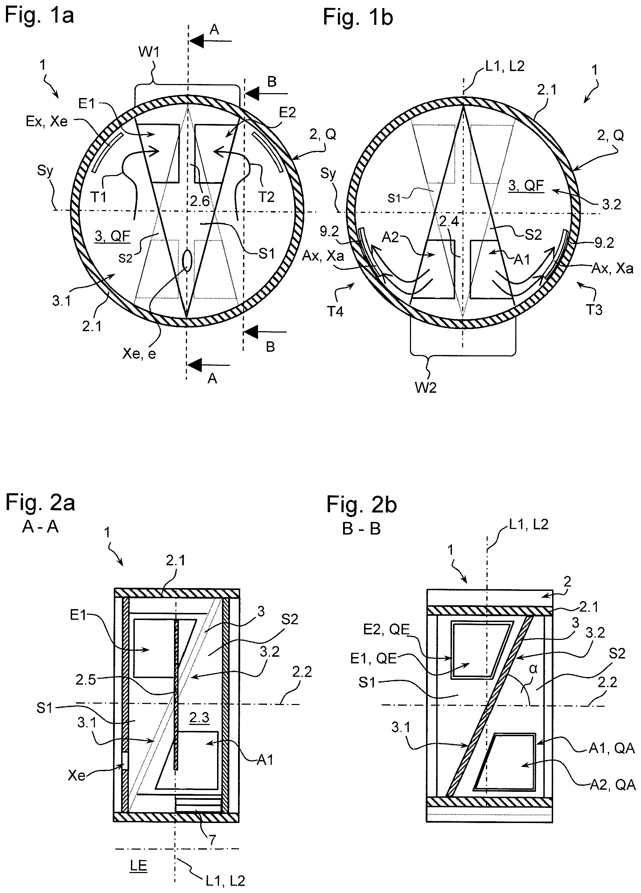

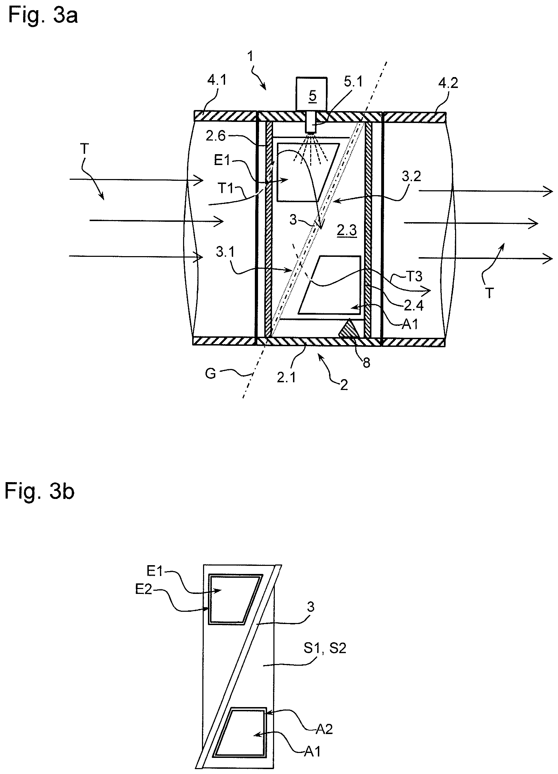

Die in Figur 1a dargestellte Mischvorrichtung 1 weist ein rohrförmiges Gehäuse 2 mit einem runden Querschnitt Q auf. Innerhalb dieses Gehäuses 2 ist eine Zwischenwand 3 vorgesehen, die gegenüber einer Mittelachse 2.2 (siehe Figur 2a, 2b) um einen Winkel $\alpha$ angestellt ist. Auf der Zwischenwand 3 ist ein Strömungsleitelement S1 vorgesehen, das sich stromauf mit Bezug zur Richtung des Abgases (gemäß Figur 2a nach links) vor der Zwischenwand 3 erstreckt. Das Strömungsleitelement S1 weist zwei Einströmöffnungen E1, E2 auf, über die ein Abgasstrom T (siehe Figur 3a) von der in Figur 1a dargestellten Anströmseite 3.1 der Zwischenwand 3 auf die rückwärtige Abströmseite 3.2 strömen kann. Die Oberfläche des Strömungsleitelementes S1 nimmt nach oben hin zu, sodass ausreichend Platz für die genannten Einströmöffnungen E1, E2 ist. Zwischen den beiden Einströmöffnungen E1, E2 ist ein Steg 2.6 ausgebildet. Durch den Steg 2.6 wird besagter Abgasstrom T in zwei Teilströme T1, T2 aufgeteilt. Der Teilstrom T1 strömt im Uhrzeigersinn und der Teilstrom T2 strömt gegen den Uhrzeigersinn in die jeweilige Einströmöffnung E1, E2. Mit Bezug zu einer Symmetrieachse Sy, die nach Figur 1a das Gehäuse 2 etwa mittig-horizontal teilt, sind die beiden Einströmöffnungen E1, E2 zum oberen Wandabschnitt W1 hin verlagert, zusätzlich weist das Strömungsleitelement S1 eine weitere Einströmöffnung Ex auf, über die ein geringfügiger Teil des Abgases von der Anströmseite 3.1 zur Abströmseite 3.2 der Zwischenwand 3 strömen kann.

Die Abströmseite 3.2 der Zwischenwand 3 ist gemäß Figur 1b spiegelsymmetrisch zur Symmetrieachse Sy ausgebildet. Dort befindet sich das Strömungsleitelement S2, welches sich in Richtung der Abgasströmung (nach Figur 2 nach rechts) über die Zwischenwand 3 erstreckt. Das Strömungsleitelement S2 weist zwei Ausströmöffnungen A1, A2 auf, die mit Bezug zur Symmetrieachse Sy zu einem Wandabschnitt W2 nach unten versetzt angeordnet sind. Beide Strömungsleitelemente S1, S2 weisen eine Längsachse L1, L2 auf, die nach dem Ausführungsbeispiel mittig zur Rohrwand 2.1 bzw. rechtwinklig zu einer Mittelachse 2.2 der Rohrwand 2.1 verläuft. In der Zwischenwand 3 sind weitere Ausströmöffnungen Ax vorgesehen, die mit Bezug zur Symmetrieachse Sy gegenüberliegend zu den Ausströmöffnungen A1, A2 platziert sind. Zwischen den beiden Ausströmöffnungen A1, A2 wird ebenfalls ein Steg 2.4 gebildet, sodass der Abgasstrom T in zwei Teilströmen T3, T4 austritt, wobei der Teilstrom T3 entgegen des Uhrzeigersinns und der Teilstrom T4 im Uhrzeigerdrehsinn das Strömungsleitelement S2 verlässt. Zusätzlich weist das Strömungsleitelement S2 weitere Ausströmöffnungen Ax im Bereich des Steges 2.4 auf. An der jeweiligen Ausströmöffnung Ax ist ein Strömungsflügel 9.2 vorgesehen ist, durch den die durch die Ausströmöffnung Ax tretende Hilfsströmung in radiale Richtung abgelenkt werden kann.

Beide Strömungsleitelemente S1, S2 begrenzen einen Mischraum 2.3, der aufgrund der gegenüberliegenden Anordnung der Einströmöffnungen E1, E2 einerseits und der Ausströmöffnungen A1, A2 andererseits vornehmlich in radialer Richtung durch den Abgasstrom T durchströmt wird.

Wie in Figur 3a zu sehen, befindet sich innerhalb des Mischraums 2.3 eine Zuführvorrichtung 5 mit einer Zuführdüse 5.1 über die ein Additiv in den Abgasstrom T gegeben wird.

In der Schnittdarstellung A-A nach Figur 2a sind das Strömungsleitelement S1 sowie das Strömungsleitelement S2 in der Schnittdarstellung zu sehen. Das hier von links einströmende Abgas tritt in die Einströmöffnung E1 bzw. in die weitere Öffnung Ex in den Mischraum 2.3 ein und verlässt diesen über die Ausströmöffnung A1. Innerhalb des Mischraums 2.3 ist unterhalb der Ausströmöffung A1 ein quer zur Hauptströmungsrichtung angeordneter Wellenboden 7 vorgesehen, der das Ausbilden eines Strömungsstaupunktes im Bereich des Ausströmöffnung A1 verhindert. Zudem ist innerhalb des Mischraums 2.3 ein Prallblech 2.5 vorgesehen, welches über die hier nicht dargestellte Düse 5.1 mit Additiv vernetzbar ist.

In der Schnittdarstellung B-B nach Figur 2b ist nur die Zwischenwand 3 geschnitten, während die beiden Strömungsleitelemente S1, S2 in der Seitenansicht zu sehen sind. Zu erkennen sind die sich gegenüberliegenden Einströmöffnungen E1, E2 sowie die beiden Ausströmöffnungen A1, A2. Die Zwischenwand 3 ist gegenüber der Mittelachse 2.2 und dem Winkel α angestellt. Die hier von links kommende Abgasströmung wird zu Großteilen in radialer Richtung nach oben zu den Einströmöffnungen E1, E2 abgelenkt und durchströmt den Mischraum 2.3 wiederum in radialer Richtung von den Einströmöffnungen E1, E2 nach unten zu den Ausströmöffnungen A1, A2 und verlässt den Mischraum 2.3 über die beiden Ausströmöffnungen A1, A2 gemäß Figur 2b nach rechts.

Die Mischvorrichtung 1 ist gemäß Figur 3a integraler Bestandteil eines Abgasrohres 4.1, 4.2 als Teil eines Partikelfilters oder eines Katalysators. Über die Düse 5.1 wird Additiv in den Mischraum 2.3 eingebracht, welches über besagten Abgasstrom T1 bzw. T2, ausgehend vom Bereich der Einströmöffnungen E1, E2, in radialer Richtung nach unten zu den Ausströmöffnungen A1, A2 geführt wird und den Mischraum 2.3 über beide Teilströme T3, T4 verlässt und sich wieder zum Gesamtstrom T vereinigt. Alternativ zu dem in Figur 2 gezeigten Wellenboden 7 ist nach Figur 3a im Bereich der Ausströmöffnung A1 innerhalb des Mischraums 2.3 ein Strömungsleitelement in Form einer Rampe 8 vorgesehen, sodass Strömungsstaupunkte in diesem Bereich verhindert werden. Maßgebend für die Definition des Winkels α ist die Gerade G, welche die beiden Schnittpunkte der Zwischenwand 3 mit der Rohrwand 2.1 verbindet, wobei die beiden Schnittpunkte mit Bezug auf die Abgasströmung bzw. die Richtung der Mittelachse 2.2 den größten Abstand zueinander aufweisen.

Nach Figur 3b ist die Zwischenwand 3 mit einem darin angeordneten einteiligen Strömungsleitelement S1, S2 dargestellt. Das einteilige Strömungsleitelement S1, S2 ist als Zylinderrohr ausgebildet, welches in eine entsprechende Aussparung in die oval geformte Zwischenwand 3 eingeführt und mit der Zwischenwand 3 dicht verbunden ist. Die so gebildete Baugruppe wird sodann in das Gehäuse 2, wie nach Figur 3a dargestellt, eingeführt, wobei die Zwischenwand 3 umfangseitig mit der Rohrwand 2.1 verbunden wird.

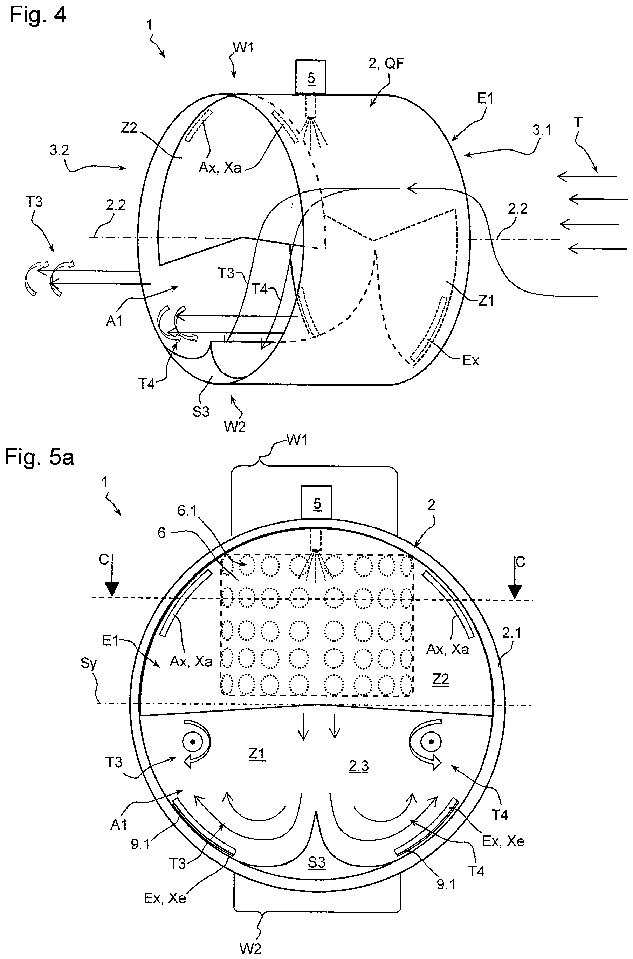

Nach Figur 4 ist eine alternative Ausführungsform dargestellt. Innerhalb des Gehäuses 2 sind zwei mit Bezug zur Mittelachse 2.2 beabstandet angeordnete Zwischenwände Z1, Z2 vorgesehen, die sich jeweils über etwa die Hälfte der Querschnittsfläche QF des Gehäuses 2 erstrecken. Die beiden Zwischenwände Z1, Z2 sind mit Bezug zu den beiden gegenüberliegend angeordneten Wandabschnitten W1, W2 ebenfalls gegenüberliegend platziert, sodass der Abgasstrom T, der durch die eine Einströmöffnung E1 in den Mischraum 2.3 eintritt, in radialer Richtung nach unten zur Ausströmöffnung A1 umgelenkt wird und den Mischraum 2.3 über die Ausströmöffnung A1 verlässt. Innerhalb des Mischraums 2.3 bzw. im Gehäuse 2 ist ebenfalls die Zuführvorrichtung 5 mit der Zuführdüse 5.1 für Additiv vorgesehen.

Im Bereich des Wandabschnitts W2 ist ein keilförmiges Strömungsleitelement S3 vorgesehen, welches den auftreffenden Abgasstrom T in zwei Teilströme T3, T4 aufteilt. Durch die keilförmige Ausbildung des Strömungsleitelementes S3 entsteht mit Bezug zur Strömungsrichtung ein Teilstrom T3, der entgegen dem Uhrzeigersinn abgelenkt wird, während der Teilstrom T4 im Uhrzeigersinn abgelenkt wird.

Nach Figur 5a ist die Mischvorrichtung 1 von der Ausströmseite 3.1 (Lee-Seite) aus dargestellt. Der Mischraum 2.3 ist nur im Umfang der unteren Auslassöffnung A1 zu sehen. Innerhalb des oberen Teils des Mischraums 2.3 ist im Unterschied zu Figur 4 ein optionales Mischrohr 6 mit einer Perforation 6.1 angeordnet, welches koaxial zur Zuführvorrichtung 5 platziert ist. Das über die Einströmöffnung E1 einströmende Abgas bzw. der Abgasstrom T durchströmt mithin zunächst das Mischrohr 6, innerhalb dessen er sich dann mit dem eingesprühten Additiv vermischt und radial nach unten zum Strömungsleitelement S3 geführt wird, wo die beiden Teilströme T3, T4, wie bereits erläutert, in gegensinniger Weise in Umfangsrichtung abgelenkt werden.

Innerhalb der zweiten Zwischenwand Z2 sind weitere schlitzförmige Ausströmöffnungen Ax vorgesehen, deren Ausströmquerschnitt Xa relativ zur Ausströmöffnung A1 untergeordnet sind. Diese dienen lediglich der Verhinderung eines Strömungsstaupunktes im Bereich des oberen Wandabschnitts W1. Zusätzlich sind in der ersten Zwischenwand Z1 weitere schlitzförmige Einströmöffnungen Ex vorgesehen, deren Einströmquerschnitt Xe relativ zum Einströmquerschnitt QE der Einströmöffnung E1 untergeordnet ist. Diese dienen der Verhinderung eines Strömungsstaupunktes vor der ersten Zwischenwand Z1 im Bereich des unteren Wandabschnittes W2. An der jeweiligen Einströmöffnung Ex ist ein Strömungsflügel 9.1 vorgesehen ist, durch den die durch die Einströmöffnung Ex tretende Hilfsströmung in radiale Richtung abgelenkt werden kann.

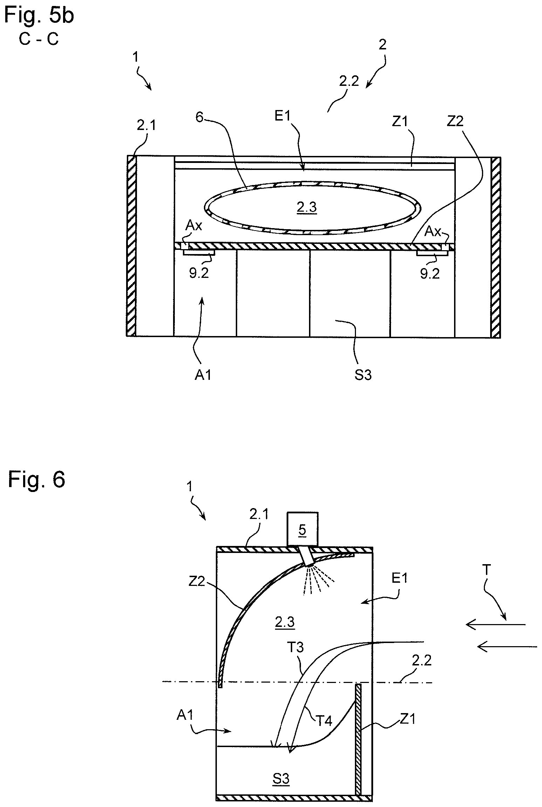

Figur 5b zeigt die Schnittdarstellung C-C aus Figur 5a. Das Mischrohr 6 ist oval ausgebildet und weist daher eine vergrößerte, dem Abgasstrom T zugewandte Ein- und Austrittsfläche auf. Nach Durchströmen des Mischrohres 6 wird der Abgasstrom T nach Figur 5b nach unten zum Strömungsleitelement S3 hin in radialer Richtung abgelenkt und verlässt die Mischvorrichtung 1 in geteilter und gegensinniger Strömungsbewegung in Umfangsrichtung nach außen.

Im Ausführungsbeispiel nach Figur 6 ist die zweite Zwischenwand Z2 gewölbt ausgebildet. Eine Mischkammer ist nicht vorgesehen. Der von rechts eintretende Abgasstrom T wird nach Eintritt in den Mischraum 2.3 in radialer Richtung nach unten zum Strömungsleitelement S3 abgelenkt und verlässt den Mischraum 2.3 durch die Ausströmöffnung A1. Die Höhe des Strömungsleitelementes S3 nimmt dabei in Richtung der ersten Zwischenwand Z1 zu, sodass die beiden Teilströme T3, T4 frühzeitig ausgebildet werden.

Bezugszeichenliste

| | |
|---|---|
| 1 | Mischvorrichtung |
| 2 | Gehäuse |
| 2.1 | Rohrwand |
| 2.2 | Mittelachse |
| 2.3 | Mischraum |
| 2.4 | Steg zwischen A1, A2 |
| 2.5 | Prallblech |
| 2.6 | Steg zwischen E1, E2 |
| 3 | Zwischenwand |
| 3.1 | Anströmseite, Luv-Seite |
| 3.2 | Abströmseite, Lee-Seite |
| 4.1 | Abgasrohr |
| 4.2 | Abgasrohr |
| 5 | Zuführvorrichtung |
| 5.1 | Zuführdüse |
| 6 | Mischer, Mischrohr |
| 6.1 | Perforation |
| 7 | Wellboden |
| 8 | Kegel, Rampe, Strömungsleitelement |
| 9.1 | Flügel von Ex |
| 9.2 | Flügel von Ax |
| A1 | Ausströmöffnung |
| A2 | Ausströmöffnung |
| Ax | Ausströmöffnung |

| | |
|---|---|
| E1 | Einströmöffnung |
| E2 | Einströmöffnung |
| Ex | Einströmöffnung |
| G | Verbindungsgerade, Gerade |
| LE | Ebene |
| L1 | Längsachse von S1 |
| L2 | Längsachse von S2 |
| Q | Querschnitt von 2 |
| QA | Ausströmquerschnitt |
| QE | Einströmquerschnitt |
| QF | Querschnittsfläche |
| S1 | Strömungsleitelement |
| S2 | Strömungsleitelement |
| S3 | Strömungsleitelement |
| Sy | Symmetrieachse |
| T | Abgasstrom |
| T1 | Teilstrom vom Abgasstrom |
| T2 | Teilstrom vom Abgasstrom |
| T3 | Teilstrom vom Abgasstrom |
| T4 | Teilstrom vom Abgasstrom |
| W1 | Wandabschnitt |
| W2 | Wandabschnitt |
| Xa | Ausströmquerschnitt von Summe Ax |
| Xe | Einströmquerschnitt von Summe Ex |
| Z1 | Zwischenwand |
| Z2 | Zwischenwand |
| α | Winkel |

**Patentansprüche**

1. Mischvorrichtung (1) zum Integrieren an ein Abgasrohr (4.1, 4.2) einer Brennkraftmaschine und zum Durchmischen eines Abgasstroms (T),

   die gebildet ist aus einem Gehäuse (2) mit einer Rohrwand (2.1) und mit einer parallel zum Abgasrohr (4.1, 4.2) ausrichtbaren Mittelachse (2.2) und die gebildet ist aus einer Zwischenwand (3), die quer zur Mittelachse (2.2) ausgerichtet ist, wobei die Zwischenwand (3) das Gehäuse (2) teilt und eine Anströmseite (3.1) und eine Abströmseite (3.2) aufweist, wobei mindestens eine Einströmöffnung (E1, E2) in der Zwischenwand (3) vorgesehen ist, über die der Abgasstrom (T) zumindest teilweise von der Anströmseite (3.1) der Zwischenwand (3) zu der gegenüberliegenden Abströmseite (3.2) der Zwischenwand (3) strömen kann, wobei die mindestens eine Einströmöffnung (E1) mit Bezug zur Mittelachse (2.2) exzentrisch platziert ist und einem Wandabschnitt (W1) der Rohrwand (2.1) angenähert ist, wobei der Abströmseite (3.2) ein Strömungsleitelement (S2) mit einer Längsachse (L2) vorgesehen ist, das mit der Zwischenwand (3) einen Mischraum (2.3) zumindest teilweise begrenzt und mittels dessen eine zumindest teilweise Umlenkung des Abgasstroms (T) in eine radiale Richtung zur Mittelachse (2.2) bewirkbar ist, wobei das Strömungsleitelement (S) mindestens zwei Ausströmöffnungen (A1, A2) aufweist und mittels des Strömungsleitelements (S2) der Abgasstrom (T) ausgehend von der mindestens einen Einströmöffnung (E1, E2) zu den mindestens zwei Ausströmöffnungen (A1, A2) leitbar ist, wobei die Ausströmöffnungen 2. (A1, A2) mit Bezug zur Mittelachse (2.2) exzentrisch platziert sind und einem gemeinsamen Wandabschnitt (W2) der Rohrwand (2.1) angenähert sind, wobei der Wandabschnitt (W2) mit Bezug zur Mittelachse (2.2) gegenüberliegend zu dem Wandabschnitt (W1) angeordnet ist, und dass die Ausströmöffnungen (A1, A2) mit Bezug zu der Längsachse (L1, L2) auf gegenüberliegenden Seiten des Strömungsleitelements (S2) angeordnet sind, **dadurch gekennzeichnet, dass** das Strömungsleitelement (S2) sich in die Richtung der Abgasströmung über die Zwischenwand erstreckt und die Ausströmöffnungen (A1, A2) auf gegenüberliegenden Seiten des Strömungsleitelements (S2) angeordnet sind und einen Steg (2.4) ausbilden, wobei mit Bezug zur Mittelachse (2.2) ein erster Teilstrom (T3) zumindest teilweise gegen den Uhrzeigersinn und ein zweiter Teilstrom (T4) zumindest teilweise im Uhrzeigersinn aus den Ausströmöffnungen (A1, A2) leitbar ist.

2. Mischvorrichtung (1) nach Anspruch 1,
   **dadurch gekennzeichnet,**
   **dass** an der Zwischenwand (3) ein erstes Strömungsleitelement (S1) mit einer Längsachse (L1) vorgesehen ist, das in axialer Richtung stromauf über die Zwischenwand (3) hervorsteht und das mit der Zwischenwand (3) den Mischraum (2.3) zumindest teilweise begrenzt, wobei zwei Einströmöffnungen (E1, E2) in der Zwischenwand (3) vorgesehen sind, die mit Bezug zur Längsachse (L1) gegenüberliegend angeordnet sind, wobei das Strömungsleitelement (S1) eine Teilung des Abgasstroms (T) in zwei Teilströme (T1, T2) bewirkt, wobei mit Bezug zur Mittelachse (2.2) ein erster Teilstrom (T1) im Uhrzeigersinn und ein zweiter Teilstrom (T2) gegen den Uhrzeigersinn um das Strömungsleitelement (S1) herum in die jeweilige Einströmöffnung (E1, E2) und in den Mischraum (2.3) leitbar ist.

3. Mischvorrichtung (1) nach Anspruch 1 oder 2,

   **dadurch gekennzeichnet,**
   **dass** die Strömungsleitelemente (S1, S2) einteilig ausgebildet sind und/oder
   **dass** zumindest ein Strömungsleitelement (S1, S2) integraler Bestandteil der Zwischenwand (3) oder der Rohrwand (2.1) ist.

4. Mischvorrichtung (1) nach einem der vorhergehenden Ansprüche,
   **dadurch gekennzeichnet,**
   **dass** die Zwischenwand (3) und die Mittelachse (2.2) einen Winkel ($\alpha$) zwischen 20° und 80° oder zwischen 30° und 60° oder zwischen 55° und 75° oder von 65° einschließen.

5. Mischvorrichtung (1) nach einem der vorhergehenden Ansprüche,
   **dadurch gekennzeichnet,**
   **dass** die Zwischenwand (3) eine einfach oder mehrfach abgewinkelte, geschwungene oder gewölbte Form hat.

6. Mischvorrichtung (1) nach einem der vorhergehenden Ansprüche,
   **dadurch gekennzeichnet,**
   **dass** im Mischraum (2.3) im Bereich vor den Ausströmöffnungen (A1, A2) zwecks Vermeidung eines Strömungsstaupunktes ein Wellboden (7) und/oder ein Strömungsleitelement (8) vorgesehen ist.

7. Mischvorrichtung (1) nach einem der vorhergehenden Ansprüche,
   **dadurch gekennzeichnet,**
   **dass** die Zwischenwand (3) zumindest teilweise in das Gehäuse (2) integriert ist oder zumindest teilweise aus dem Gehäuse (2) gebildet ist.

8. Mischvorrichtung (1) zum Anschließen an ein Abgasrohr (4.1, 4.2) einer Brennkraftmaschine und zum Durchmischen eines Abgasstroms (T), die gebildet ist aus einem Gehäuse (2) mit einer Rohrwand (2.1) und mit einer parallel zum Abgasrohr (4.1, 4.2) ausrichtbaren Mittelachse (2.2) und mit einer ersten Zwischenwand (Z1) und mit einer zweiten Zwischenwand (Z2), die quer zur Mittelachse (2.2) ausgerichtet sind, wobei beide Zwischenwände (Z1, Z2) einen Mischraum (2.3) zumindest teilweise begrenzen, wobei die erste Zwischenwand (Z1) mindestens eine Einströmöffnung (E1) aufweist, über die der Abgasstrom T zumindest teilweise in den Mischraum (2.3) eintreten kann, wobei die mindestens eine Einströmöffnung (E1) mit Bezug zur Mittelachse (2.2) exzentrisch platziert ist und einem Wandabschnitt (W1) der Rohrwand (2.1) angenähert ist, und die zweite Zwischenwand (Z2) mindestens eine Ausströmöffnung (A1) aufweist, über die der Abgasstrom (T) T zumindest teilweise aus dem Mischraum (2.3) austreten kann, wobei die Ausströmöffnung (A1) mit Bezug zur Mittelachse (2.2) exzentrisch platziert ist und einem Wandabschnitt (W2) der Rohrwand (2.1) angenähert ist,
   **dadurch gekennzeichnet,**
   **dass** der Wandabschnitt (W2) mit Bezug zur Mittelachse (2.2) gegenüberliegend zum Wandabschnitt (W1) angeordnet ist, so dass eine Umlenkung des Abgasstroms (T) zumindest teilweise in eine radiale Richtung zur Mittelachse (2.2) in eine Richtung zu der mindestens einen Ausströmöffnung (A1) bewirkbar ist, und dass in Strömungsrichtung nach der ersten Zwischenwand (Z1) und nach der radialen Ablenkung mindestens ein Strömungsleitelement (S3) es im Mischraum (2.3) vorgesehen ist, das in radialer Richtung über die Rohrwand (2.1) hervorsteht und eine Teilung des Abgasstroms (T) in zwei Teilströme (T3, T4) bewirkt, wobei mit Bezug zur Mittelachse (2.2) ein erster Teilstrom (T3) gegen den Uhrzeigersinn und ein zweiter Teilstrom (T4) im Uhrzeigersinn um das Strömungsleitelement (S3) herum leitbar ist.

9. Mischvorrichtung (1) nach einem der vorhergehenden Ansprüche,
**dadurch gekennzeichnet,**
**dass** eine Zuführvorrichtung (5) mit einer Zuführdüse (5.1) vorgesehen ist, über die ein Additiv in den Mischraum (2.3) einbringbar ist.

10. Mischvorrichtung (1) nach einem der vorhergehenden Ansprüche,
**dadurch gekennzeichnet,**
**dass** die mindestens eine Einströmöffnung (E1, E2) oder die Einströmöffnungen (E1, E2) einen Einströmquerschnitt QE bilden und das Gehäuse (2) eine strömungswirksame Querschnittsfläche QF aufweist, mit

$$0{,}08 \; QF <= QE <= 0{,}42 \; QF.$$

11. Mischvorrichtung (1) nach einem der vorhergehenden Ansprüche,
**dadurch gekennzeichnet,**
**dass** die Ausströmöffnung (A1) oder die Ausströmöffnungen (A1, A2) einen Ausströmquerschnitt QA bilden und das Gehäuse (2) eine strömungswirksame Querschnittsfläche QF aufweist, mit

$$0{,}08 \; QF <= QA <= 0{,}42 \; QF.$$

12. Mischvorrichtung (1) nach einem der vorhergehenden Ansprüche,
**dadurch gekennzeichnet,**
**dass** die mindestens eine Einströmöffnung (E1, E2) oder die Einströmöffnungen (E1, E2) einen Einströmquerschnitt QE bilden und dass mindestens eine weitere Einströmöffnung (Ex) in dem Strömungsleitelement (S1) oder in der Zwischenwand (Z1) vorgesehen ist, über die ein Teil des Abgasstroms (T) T in den Mischraum (2.3) eintreten kann , wobei die mindestens eine Einströmöffnung (Ex) einen Einströmquerschnitt Xe bildet, mit Xe <= 0,1 QE.

13. Mischvorrichtung (1) nach einem der vorhergehenden Ansprüche,
**dadurch gekennzeichnet,**
**dass** die Ausströmöffnung (A1) oder die Ausströmöffnungen (A1, A2) einen Ausströmquerschnitt QA bilden und dass mindestens eine weitere Ausströmöffnung (Ax) in dem Strömungsleitelement (S2) oder in der Zwischenwand (Z2) vorgesehen ist, über die ein Teil des Abgasstroms (T) den Mischraum (2.3) verlassen kann, wobei die mindestens eine Ausströmöffnung 2. (Ax) einen Ausströmquerschnitt Xa bildet, mit Xa <= 0,1 QA.

14. Mischvorrichtung (1) nach einem der Ansprüche 10 oder 11,
**dadurch gekennzeichnet,**
**dass** an mindestens einer Einströmöffnung (Ex) und/oder an mindestens einer Ausströmöffnung (Ax) ein Strömungsflügel (9.1, 9.2) vorgesehen ist.

15. Mischvorrichtung (1) nach einem der vorhergehenden Ansprüche,
**dadurch gekennzeichnet,**
**dass** im Mischraum (2.3) mindestens ein statischer Mischer (6) und/oder mindestens ein Prallblech (2.5) vorgesehen ist, wobei das Prallblech (2.5) parallel zur Längsachse 2. (L1, L2) des Strömungsleitelementes (S1, S2) angeordnet ist.

**Claims**

1. A mixing device (1) for integration on an exhaust pipe (4.1, 4.2) of an internal combustion engine and for mixing an exhaust gas flow (T), said mixing device being formed of a housing (2) having a pipe wall (2.1) and having a centre axis (2.2) that can be aligned in parallel with the exhaust pipe (4.1, 4.2), and being formed of an intermediate wall (3) which is aligned transverse to the centre axis (2.2),

   the intermediate wall (3) dividing the housing (2) and having an upstream side (3.1) and a downstream side (3.2),
   at least one inflow opening (E1, E2) being provided in the intermediate wall (3), via which inflow opening the exhaust gas flow (T) can flow at least in part from the upstream side (3.1) of the intermediate wall (3) to the opposite downstream side (3.2) of the intermediate wall (3),
   the at least one inflow opening (E1) being placed eccentrically with respect to the centre axis (2.2) and close to a wall portion (W1) of the pipe wall (2.1),
   wherein a flow guide element (S2) with a longitudinal axis (L2) is provided on the downstream side (3.2), which flow guide element at least in part delimits a mixing chamber (2.3) together with the intermediate wall (3) and by means of which it is possible for said flow guide element to deflect the exhaust gas flow (T) at least in part in a radial direction with respect to the centre axis (2.2),

wherein the flow guide element (S) has at least two outflow openings (A1, A2), it being possible for the flow guide element (S2) to guide the exhaust gas flow (T) from the at least one inflow opening (E1, E2) to the at least two outflow openings (A1, A2), the outflow openings (A1, A2) being placed eccentrically with respect to the centre axis (2.2) and close to a common wall portion (W2) of the pipe wall (2.1), wherein the wall portion (W2) is arranged opposite the wall portion (W1) with respect to the centre axis (2.2), the outflow openings (A1, A2) being arranged on opposite sides of the flow guide element (S2) with respect to the longitudinal axis (L1, L2), **characterised in that** the flow guide element (S2) extends beyond the intermediate wall in the direction of the exhaust gas flow, and the outflow openings (A1, A2) are arranged on opposite sides of the flow guide element (S2) and form a connecting portion (2.4),

wherein it is possible, with respect to the centre axis (2.2), for a first partial flow (T3) to be guided at least in part counterclockwise and for a second partial flow (T4) to be guided at least in part clockwise out of the outflow openings (A1, A2).

2. The mixing device (1) according to Claim 1, **characterised in that**
a first flow guide element (S1) with a longitudinal axis (L1) is provided on the intermediate wall (3), said first flow guide element projecting upstream in the axial direction beyond the intermediate wall (3), the mixing chamber (2.3) being delimited at least in part by said first flow guide element, together with the intermediate wall (3), two inlet openings (E1, E2) being provided in the intermediate wall (3), which are arranged opposite one another with respect to the longitudinal axis (L1), the flow guide element (S1) dividing the exhaust gas flow (T) into two partial flows (T1, T2), wherein it is possible, with respect to the centre axis (2.2), for a first partial flow (T1) to be guided clockwise and for a second partial flow (T2) to be guided counterclockwise about the flow guide element (S1) into the particular inflow opening (E1, E2) and into the mixing chamber (2.3).

3. The mixing device (1) according to Claim 1 or 2,

   **characterised in that**
   the flow guide elements (S1, S2) are formed in one piece, and/or
   at least one flow guide element (S1, S2) is an integral part of the intermediate wall (3) or the pipe wall (2.1).

4. The mixing device (1) according to any one of the preceding claims,
**characterised in that**
the intermediate wall (3) and the centre axis (2.2) enclose an angle ($\alpha$) between 20° and 80° or between 30° and 60° or between 55° and 75° or of 65°.

5. The mixing device (1) according to any one of the preceding claims, **characterised in that**
the intermediate wall (3) has a shape that is angled, curved or arched at one or more points.

6. The mixing device (1) according to any one of the preceding claims,
**characterised in that**
an undulating base (7) and/or a flow guide element (8) is provided in the mixing chamber (2.3) in the region upstream of the outflow openings (A1, A2) for the purpose of avoiding a flow stagnation point.

7. The mixing device (1) according to any one of the preceding claims, **characterised in that**
the intermediate wall (3) is at least in part integrated into the housing (2) or is at least in part formed of the housing (2).

8. A mixing device (1) for connection to an exhaust pipe (4.1, 4.2) of an internal combustion engine and for mixing an exhaust gas flow (T), said mixing device being formed of a housing (2) having a pipe wall (2.1) and having a centre axis (2.2) that can be aligned in parallel with the exhaust pipe (4.1, 4.2) and having a first intermediate wall (Z1) and a second intermediate wall (Z2), which are aligned transverse to the centre axis (2.2), both intermediate walls (Z1, Z2) at least in part defining a mixing chamber (2.3), the first intermediate wall (Z1) having at least one inflow opening (E1), via which the exhaust gas flow T can at least in part enter the mixing chamber (2.3), the at least one inflow opening (E1) being placed eccentrically with respect to the centre axis (2.2) and close to a wall portion (W1) of the pipe wall (2.1), the second intermediate wall (Z2) having at least one outflow opening (A1), via which the exhaust gas flow (T) can at least in part exit the mixing chamber (2.3), the outflow opening (A1) being placed eccentrically with respect to the centre axis (2.2) and close to a wall portion (W2) of the pipe wall (2.1),
**characterised in that**
the wall portion (W2) is arranged opposite the wall portion (W1) with respect to the centre axis (2.2), such that the exhaust gas flow (T) can be deflected at least in part in a radial direction with respect to the centre axis (2.2) in a direction towards the at least one outflow opening (A1), and **in that** at least one flow guide element (S3) is provided in the mixing chamber (2.3) downstream of the first intermediate wall (Z1) and downstream of the radial deflection in the direction of flow, said flow guide element projecting beyond the pipe wall (2.1) in the radial direction and dividing the exhaust gas flow (T) into two partial flows (T3, T4), wherein it is possible, with respect to the centre axis (2.2), for a first partial flow (T3) to be guided counterclockwise and for a second partial flow (T4) to be guided clockwise about the flow guide element (S3).

9. The mixing device (1) according to any one of the preceding claims,
   **characterised in that**
   a supply device (5) having a supply nozzle (5.1) is provided, via which an additive can be introduced into the mixing chamber (2.3).

10. The mixing device (1) according to any one of the preceding claims,
    **characterised in that**
    the at least one inflow opening (E1, E2) or the inflow openings (E1, E2) form an inflow cross-section QE, and the housing (2) has an effective-flow cross-sectional area QF, where

    $$0.08 \, QF <= QE <= 0.42 \, QF.$$

11. The mixing device (1) according to any one of the preceding claims,
    **characterised in that**
    the outflow opening (A1) or the outflow openings (A1, A2) form an outflow cross-section QA, and the housing (2) has an effective-flow cross-sectional area QF, where

    $$0.08 \, QF <= QA <= 0.42 \, QF.$$

12. The mixing device (1) according to any one of the preceding claims,
    **characterised in that**
    the at least one inflow opening (E1, E2) or the inflow openings (E1, E2) form an inflow cross section QE, and at least one further inflow opening (Ex) is provided in the flow guide element (S1) or in the intermediate wall (Z1), it being possible, via said further inflow opening, for part of the exhaust gas flow (T) to enter the mixing chamber (2.3), wherein the at least one inflow opening (Ex) forms an inflow cross section Xe, where Xe <= 0.1 QE.

13. The mixing device (1) according to any one of the preceding claims,
    **characterised in that**
    the outflow opening (A1) or the outflow openings (A1, A2) form an outflow cross section QA, and at least one further outflow opening (Ax) is provided in the flow guide element (S2) or in the intermediate wall (Z2), it being possible, via said further outflow opening, for part of the exhaust gas flow (T) to exit the mixing chamber (2.3), the at least one outflow opening (Ax) forming an outflow cross section Xa, where Xa <= 0.1 QA.

14. The mixing device (1) according to either one of Claims 10 or 11,
    **characterised in that**
    a flow vane (9.1, 9.2) is provided at at least one inflow opening (Ex) and/or at at least one outflow opening (Ax).

15. The mixing device (1) according to any one of the preceding claims,

    **characterised in that**
    in the mixing chamber (2.3), at least one static mixer (6) and/or
    at least one baffle plate (2.5) is provided, the baffle plate (2.5) being arranged in parallel with the longitudinal axis (L1, L2) of the flow guide element (S1, S2).

**Revendications**

1. Dispositif mélangeur (1) destiné à être intégré au niveau d'un tuyau d'échappement (4.1, 4.2) d'un moteur à combustion interne et à mélanger un flux de gaz d'échappement (T), lequel est formé d'un boîtier (2) avec une paroi tubulaire (2.1) et avec un axe médian (2.2) qui peut être orienté parallèlement au tuyau d'échappement (4.1, 4.2) et lequel est formé d'une paroi intermédiaire (3) qui est orientée transversalement à l'axe médian (2.2), la paroi intermédiaire (3) divisant le boîtier (2) et présentant un côté flux entrant (3.1) et un côté flux sortant (3.2),

   dans lequel au moins une ouverture d'admission (E1, E2) est prévue dans la paroi intermédiaire (3), par le biais de laquelle le flux de gaz d'échappement (T) peut s'écouler au moins en partie depuis le côté flux entrant (3.1) de la paroi intermédiaire (3) vers le côté flux sortant opposé (3.2) de la paroi intermédiaire (3), dans lequel l'au moins une ouverture d'admission (E1) est placée de manière excentrée par rapport à l'axe médian (2.2) et est rapprochée d'une section de paroi (W1) de la paroi tubulaire (2.1), dans lequel, du côté flux sortant (3.2), un élément de guidage d'écoulement (S2) est prévu avec un axe longitudinal (L2), lequel avec la paroi intermédiaire (3) délimite au moins en partie un espace de mélange (2.3) et à l'aide duquel une déviation au moins en partie du flux de gaz d'échappement (T) peut être provoquée dans une direction radiale par rapport à l'axe médian (2.2),

dans lequel l'élément de guidage d'écoulement (S) présente au moins deux ouvertures d'évacuation (A1, A2) et à l'aide de l'élément de guidage d'écoulement (S2) le flux de gaz d'échappement (T) peut être guidé à partir de l'au moins une ouverture d'admission (E1, E2) vers les au moins deux ouvertures d'évacuation (A1, A2), les ouvertures d'évacuation (A1, A2) étant placées de manière excentrée par rapport à l'axe médian (2.2) et rapprochées d'une section de paroi commune (W2) de la paroi tubulaire (2.1), la section de paroi (W2) étant disposée par rapport à l'axe médian (2.2) de manière opposée à la section de paroi (W1), et les ouvertures d'évacuation (A1, A2) étant disposées par rapport à l'axe longitudinal (L1, L2) sur des côtés opposés de l'élément de guidage d'écoulement (S2), **caractérisé en ce que** l'élément de guidage d'écoulement (S2) s'étend dans la direction de l'écoulement des gaz d'échappement par le biais de la paroi intermédiaire et les ouvertures d'évacuation (A1, A2) sont disposées sur des côtés opposés de l'élément de guidage d'écoulement (S2) et forment une traverse (2.4), dans lequel, par rapport à l'axe médian (2.2), un premier flux partiel (T3) peut être guidé à partir des ouvertures d'évacuation (A1, A2) au moins en partie dans le sens anti-horaire et un second flux partiel (T4) au moins en partie dans le sens horaire.

2. Dispositif mélangeur (1) selon la revendication 1, **caractérisé en ce que**, au niveau de de la paroi intermédiaire (3), un premier élément de guidage d'écoulement (S1) est prévu avec un axe longitudinal (L1), lequel fait saillie en amont dans la direction axiale au-dessus de la paroi intermédiaire (3) et lequel avec la paroi intermédiaire (3) délimite au moins en partie l'espace de mélange (2.3), dans lequel deux ouvertures d'admission (E1, E2) sont prévues dans la paroi intermédiaire (3) et sont disposées de manière opposée par rapport à l'axe longitudinal (L1), l'élément de guidage d'écoulement (S1) provoquant une division du flux de gaz d'échappement (T) en deux flux partiels (T1, T2), dans lequel par rapport à l'axe médian (2.2) un premier flux partiel (T1) peut être guidé dans le sens horaire et un second flux partiel (T2) dans le sens anti-horaire autour de l'élément de guidage d'écoulement (S1) dans l'ouverture d'admission respective (E1, E2) et dans l'espace de mélange (2.3).

3. Dispositif mélangeur (1) selon la revendication 1 ou 2,

caractérisé
en ce que les éléments de guidage d'écoulement (S1, S2) sont réalisés d'un seul tenant et/ou
en ce qu'au moins un élément de guidage d'écoulement (S1, S2) fait partie intégrale de la paroi intermédiaire (3) ou de la paroi tubulaire (2.1).

4. Dispositif mélangeur (1) selon l'une quelconque des revendications précédentes, **caractérisé en ce que** la paroi intermédiaire (3) et l'axe médian (2.2) forment un angle ($\alpha$) entre 20° et 80° ou entre 30° et 60° ou entre 55° et 75° ou de 65°.

5. Dispositif mélangeur (1) selon l'une quelconque des revendications précédentes, **caractérisé en ce que** la paroi intermédiaire (3) a une forme coudée, arquée ou bombée de manière simple ou multiple.

6. Dispositif mélangeur (1) selon l'une quelconque des revendications précédentes, **caractérisé en ce que**, dans l'espace de mélange (2.3) dans la zone en amont des ouvertures d'évacuation (A1, A2) dans le but d'éviter un point de stagnation de l'écoulement, un fond de puits (7) et/ou un élément de guidage d'écoulement (8) est prévu.

7. Dispositif mélangeur (1) selon l'une quelconque des revendications précédentes, **caractérisé en ce que** la paroi intermédiaire (3) est intégrée au moins en partie dans le boîtier (2) ou est formée au moins en partie à partir du boîtier (2).

8. Dispositif mélangeur (1) destiné à être raccordé au niveau d'un tuyau d'échappement (4.1, 4.2) d'un moteur à combustion interne et à mélanger un flux de gaz d'échappement (T), lequel est formé d'un boîtier (2) avec une paroi tubulaire (2.1) et avec un axe médian (2.2) qui peut être orienté parallèlement au tuyau d'échappement (4.1, 4.2) et avec une première paroi intermédiaire (Z1) et une seconde paroi intermédiaire (Z2) qui sont orientées transversalement à l'axe médian (2.2), dans lequel les deux parois intermédiaires (Z1, Z2) délimitent au moins en partie un espace de mélange (2.3), dans lequel la première paroi intermédiaire (Z1) présente au moins une ouverture d'admission (E1), par le biais de laquelle le flux de gaz d'échappement (T) peut entrer au moins en partie dans l'espace de mélange (2.3), l'au moins une ouverture d'admission (E1) étant placée de manière excentrée par rapport à l'axe médian (2.2) et étant rapprochée d'une section de paroi (W1) de la paroi tubulaire (2.1), et la seconde paroi intermédiaire (Z2) présente au moins une ouverture d'évacuation (A1), par le biais de laquelle le flux de gaz d'échappement (T) peut sortir au moins en partie de l'espace de mélange (2.3), l'ouverture d'évacuation (A1) étant placée de manière excentrée par rapport à l'axe médian (2.2) et étant rapprochée d'une section de paroi (W2) de la paroi tubulaire (2.1),

**caractérisé en ce que**
la section de paroi (W2) est disposée par rapport à l'axe médian (2.2) de manière opposée à la section de paroi (W1), de telle sorte qu'une déviation du flux de gaz d'échappement (T) peut être provoquée au moins en partie dans une direction radiale par rapport à l'axe médian (2.2) dans une direction vers l'au moins une ouverture d'évacuation (A1), et
**en ce que**, dans la direction d'écoulement en aval de la première paroi intermédiaire (Z1) et en aval de la déviation radiale, au moins un élément de guidage d'écoulement (S3) est prévu dans l'espace de mélange (2.3), lequel fait saillie dans la direction radiale au-dessus de la paroi tubulaire (2.1) et provoque une division du flux de gaz d'échappement (T) en deux flux partiels (T3, T4), dans lequel par rapport à l'axe médian (2.2) un premier flux partiel (T3) peut être guidé autour de l'élément de guidage d'écoulement (S3) dans le sens anti-horaire et un second flux partiel (T4) dans le sens horaire.

9. Dispositif mélangeur (1) selon l'une quelconque des revendications précédentes,
**caractérisé en ce qu'**
un moyen d'alimentation (5) avec une buse d'alimentation (5.1) est prévu, par lequel un additif peut être introduit dans l'espace de mélange (2.3).

10. Dispositif mélangeur (1) selon l'une quelconque des revendications précédentes,
**caractérisé en ce que**
l'au moins une ouverture d'admission (E1, E2) ou l'ouvertures d'admission (E1, E2) forment une section transversale d'admission QE et le boîtier (2) présente une surface de section transversale efficace à l'écoulement QF, où 0,08 QF <= QE <= 0,42 QF.

11. Dispositif mélangeur (1) selon l'une quelconque des revendications précédentes,
**caractérisé en ce que**
l'ouverture d'évacuation (A1) ou les ouvertures d'évacuation (A1, A2) forment une section transversale d'évacuation QA et le boîtier (2) présente une surface de section transversale efficace à l'écoulement QF, où 0,08 QF <= QA <= 0,42 QF.

12. Dispositif mélangeur (1) selon l'une quelconque des revendications précédentes,

**caractérisé en ce que**
l'au moins une ouverture d'admission (E1, E2) ou les ouvertures d'admission (E1, E2) forment une section transversale d'admission QE et l'au moins une autre ouverture d'admission (Ex) est prévue dans l'élément de guidage d'écoulement (S1) ou dans la paroi intermédiaire (Z1), par le biais de laquelle une partie du flux de gaz d'échappement (T) peut entrer dans l'espace de mélange (2.3), dans lequel l'au moins une ouverture d'admission (Ex) forme une section transversale d'amission Xe, où Xe <= 0,1 QE.

13. Dispositif mélangeur (1) selon l'une quelconque des revendications précédentes,
**caractérisé en ce que**
l'ouverture d'évacuation (A1) ou les ouvertures d'évacuation (A1, A2) forment une section transversale d'évacuation QA et **en ce qu'**au moins une autre ouverture d'évacuation (Ax) est prévue dans l'élément de guidage d'écoulement (S2) ou dans la paroi intermédiaire (Z2), par le biais de laquelle une partie du flux de gaz d'échappement (T) peut quitter l'espace de mélange (2.3), dans lequel l'au moins une ouverture d'évacuation (Ax) forme une section transversale d'évacuation Xa, où Xa <= 0,1 QA.

14. Dispositif mélangeur (1) selon l'une quelconque des revendications 10 ou 11,
**caractérisé en ce que**,
au niveau d'au moins une ouverture d'admission (Ex) et/ou au niveau d'au moins une ouverture d'évacuation (Ax), une aube d'écoulement (9.1, 9.2) est prévue.

15. Dispositif mélangeur (1) selon l'une quelconque des revendications précédentes,
**caractérisé en ce que**
dans l'espace de mélange (2.3) au moins un mélangeur statique (6) et/ou au moins +une chicane (2.5) est prévu(e), dans lequel la chicane (2.5) est disposée parallèlement à l'axe longitudinal (L1, L2) de l'élément de guidage d'écoulement (S1, S2).

## Fig. 1a

W1

A

B

1

E1

Ex, Xe

E2

Sy

2, Q

T1

2.6

T2

Sy

3, QF

S1

S2

3.1

2.1

Xe, e

B

A

## Fig. 1b

L1, L2

2.1

1

2, Q

S1

3, QF

3.2

9.2

A2

2.4

S2

9.2

Ax, Xa

A1

Ax, Xa

T4

T3

W2

## Fig. 2a
A - A

1

2.1

E1

3

S2

3.2

2.5

2.2

S1

2.3

3.1

A1

Xe

7

LE

L1, L2

## Fig. 2b
B - B

L1, L2

1

2

2.1

E2, QE

3

3.2

E1, QE

α

S2

S1

2.2

3.1

A1, QA

A2, QA

Fig. 3a

Fig. 3b

## Fig. 4

## Fig. 5a

## Fig. 5b
C - C

## Fig. 6

**IN DER BESCHREIBUNG AUFGEFÜHRTE DOKUMENTE**

**In der Beschreibung aufgeführte Patentdokumente**

- WO 2012080585 A1
- US 2965695 A
- WO 2014051605 A1
- US 8033104 B2
- DE 102013012909 A1
- FR 2943381 A1
- WO 2014051617 A1
- DE 102012224198 A1